# EUROPEAN PATENT APPLICATION

(11) **EP 2 375 267 A1**
(43) Date of publication of application: **12.10.2011**
(21) Application number: 10171832.8
(22) Date of filing: 04.08.2010
(51) Int. Cl.: G01S 19/19, A63B 71/06, G01S 5/00, G01S 19/41

(54) **A local area GNSS tracking system and method**

(30) Priority: 12.04.2010 BE 201000231
(71) Applicant: Hajjab, Abdellah, 2830 Willebroek (BE)
(72) Inventor: Hajjab, Abdellah, 2830 Willebroek (BE)
(74) Representative: BiiP cvba

(57) **Abstract**

The present invention relates to a local area tracking system comprising:
- a plurality of tracking devices (4,4'), each one comprising a tracking device receiver (7) for receiving beacon signals and generating in response a signal indicating the position of said tracking device, and an interface (8) for transmitting at least an identifier signal and said position signal; and
- a base station (5) comprising means for receiving said identifier and position signals and calculating the relative positions of the tracking devices (4,4'); characterized in that said tracking device receiver is a GNSS receiver, that at least one of said tracking devices (4,4') is a reference (4'), and that said base station (5) also comprises means for calculating the relative position of at least another one of said tracking devices relative to a point, line, area, and/or space (3,3a,3b,3c,3d,3e,15,15a,15b,17) having a fixed predefined position and/or orientation relative to said reference tracking device (4').

Further, the present invention relates to a local area tracking method comprising the steps of:
- providing a plurality of tracking devices (4,4'), each comprising a tracking device receiver for receiving beacon signals and generating in response a signal indicating the position of said tracking device (4,4'), and an interface (8) for transmitting at least an identifier signal and said position signal;
- transmitting the position and identifier signals of said plurality of tracking devices (4,4') to a base station (5);
- calculating the relative positions of said tracking devices (4,4');

characterized in that the tracking device receiver is a GNSS receiver and that the method further comprises the steps of:
- defining a fixed position and/or orientation of at least one point, line, area, and/or space relative (3,3a,3b,3c,3d,3e,15,15a,15b,17) to at least one of said plurality of tracking devices (4,4') which is a reference (4'); and
- calculating the position of at least another one of said tracking devices (4,4') relative to said at least one point, line, area, and/or space.

## Description

### FIELD OF THE INVENTION

The present invention relates to a local area GNSS tracking system and method, and particularly to a sports tracking system and method.

### BACKGROUND OF THE INVENTION

In sports competitions as well as training it is highly important to follow the positions of the players and/or game elements such as balls, pucks, spears, etc. This task often overwhelms the human eye, in particular in high-level competitions, raising the danger of wrong refereeing decisions.

For this reason, technical means have been proposed to assist refereeing by tracking the players and/or game elements.

GB2402825 for example proposes using Global Positioning System (GPS) tracking devices for this purpose: GPS locator devices each associated with a respective competitor have wireless connection with a central processor that processes location data sets and generate a log of relative location data of each competitor within the event.

A main problem however is that current tracking systems based on GPS cannot fulfill tracking speed and accuracy requirements and can only be used outdoor.

Another problem with current tracking systems based on GPS is that, while it provides the relative positions of the players, this information alone is insufficient to determine game occurrences related to the position of players and/or equipment with respect also to features of the sport field, track or arena such as areas, boundaries, goals, etc. For instance, for the offside rule in association football, it is necessary to determine not only the positions of the players and the ball relative to each other, but also within the field.

Still another problem is that current tracking systems based on GPS do not offer 3D-tracking such that for example balls, toy airplanes etc. are tracked only in the horizontal plain of the playing field but not in vertical direction.

In an attempt to solve the above problem, Stelzer et al. (Proc. SPIE, Vol. 5048, 136 (2003)) describe a novel local position measurement (LPM) technology operating in the 5GHz ISM band, and consisting of lightweight transponders of which the 3-D position is measured and base stations located around the playing field. The collected data are processed and converted real-time into computer animations of the playing field and the athletes. The system can be installed indoors as well as outdoors.

These RF-based systems have a major drawback that, in order to cover the whole playing field, a considerable number of base stations have to be installed near the playing field generating a radiation grid, which makes such system immobile. If one desires to monitor a plurality of teams, one is forced either to install such system on a plurality of playing fields, resulting in excessive costs, either to schedule games and/or training sessions such that the playing field equipped with such system is available for the team to be monitored resulting in inefficient use of playing fields and rigid scheduling.

Further, such system cannot be used for large-area or mobile activities such as for example golf where the locations of competitors and ball can vary over a large area, possibly even outside the actual golf course.

Another drawback of RF- based systems that they are very sensitive to reflections by walls, floors, ceilings, such that dedicated provisions have to be made for decreasing the influence of such reflections.

Therefore, it is an object of the present invention to provide a local area tracking system and method requiring a limited number of hardware, in particularly a limited number of base stations, such that equipping a plurality of playing fields does not automatically result in excessive costs, while sufficient tracking speed and accuracy is kept assured.

Another object of the present invention is to provide a local area tracking system and method that is also applicable for large-area activities and even for mobile activities.

Further, it is an object of the present invention to provide a local area tracking system and method less suffering from reflections and suitable for indoor applications.

Still another object of a local area tracking system and method in accordance with the present invention is to provide the possibility to locate the position of the players and game elements relative to each other and relative to the playing field, preferably in 3D.

The present invention meets the above objects by using tracking devices comprising a tracking device receiver for receiving Global Navigation Satellite Systems (GNSS) signals, by using at least one of said tracking devices as a reference, and by using a base station comprising means for calculating the relative position of another tracking device relative to at least one point, line, area, and/or space having a predetermined position and/or orientation fixed relative to said reference tracking device.

### SUMMARY OF THE INVENTION

The present invention is directed to a local area tracking system comprising:
- a plurality of tracking devices (4,4'), each one comprising a tracking device receiver (7) for receiving beacon signals and generating in response a signal indicating the position of said tracking device, and an interface (8) for transmitting at least an identifier signal and said position signal; and
- a base station (5) comprising means for receiving said identifier and position signals and calculating the relative positions of the tracking devices (4,4');
characterized in that said tracking device receiver is a GNSS receiver, that at least one of said tracking devices (4,4') is a reference (4'), and that said base station (5) also comprises means for calculating the relative position of at least another one of said tracking devices relative to a point, line, area, and/or space (3,3a,3b,3c,3d,3e,15,15a,15b,17) having a fixed predefined position and/or orientation relative to said reference tracking device (4').

Further, the present invention is directed to a local area tracking method comprising the steps of:
- providing a plurality of tracking devices (4,4'), each comprising a tracking device receiver for receiving beacon signals and generating in response a signal indicating the position of said tracking device (4,4'), and an interface (8) for transmitting at least an identifier signal and said position signal;
- transmitting the position and identifier signals of said plurality of tracking devices (4,4') to a base station (5);
- calculating the relative positions of said tracking devices (4,4');

characterized in that the tracking device receiver is a GNSS receiver and that the method further comprises the steps of:
- defining a fixed position and/or orientation of at least one point, line, area, and/or space relative (3,3a,3b,3c,3d,3e,15,15a,15b,17) to at least one of said plurality of tracking devices (4,4') which is a reference (4'); and
- calculating the position of at least another one of said tracking devices (4,4') relative to said at least one point, line, area, and/or space.

### BRIEF DESCRIPTION OF THE DRAWINGS

FIG 1 schematically illustrates an association football field, players and ball equipped with a tracking system according to the present invention.
FIG 2 illustrates a player and a ball equipped with a tracking device of a tracking system according to the present invention.
FIG 3 schematically illustrates a logistics system equipped with a tracking system according to the present invention;
FIG 4 schematically illustrated a wide area tracking system according to the present invention for tracking vehicles
FIG 5 schematically illustrates an outpatient tracking system according to the present invention.

### DESCRIPTION OF THE INVENTION

The present invention is by no means limited to sports applications. It can be used for tracking humans, animals and/or objects within any kind of predefined space, such as an amusement park, a city, a path, an industrial installation, or even globally, on shore or off shore, etc.

In a first embodiment in accordance with the present invention a local area tracking system is provided comprising:
- a plurality of tracking devices (4,4'), each one comprising a tracking device receiver (7) for receiving beacon signals and generating in response a signal indicating the position of said tracking device, and an interface (8) for transmitting at least an identifier signal and said position signal; and
- a base station (5) comprising means for receiving said identifier and position signals and calculating the relative positions of the tracking devices (4,4');
characterized in that said tracking device receiver is a GNSS receiver, that at least one of said tracking devices (4,4') is a reference (4'), and that said base station (5) also comprises means for calculating the relative position of at least another one of said tracking devices relative to a point, line, area, and/or space (3,3a,3b,3c,3d,3e,15,15a,15b,17) having a fixed predefined position and/or orientation relative to said reference tracking device (4').

A main advantage of the above system is that only a limited number of hardware, in particularly a limited number of base stations, in principle only one, is required, such that equipping a plurality of local areas (e.g. playing fields, parking levels) does not automatically result in excessive costs, while sufficient tracking speed and accuracy is kept assured. Because position is determined based on a GNSS system and not by covering a local area by means of a radiation grid, base stations providing such grid are not required.

Further, by using at least one of the tracking devices as a reference at a fixed predefined position and/or orientation relative to a point, line, area, and/or space, the position of at least one other tracking device relative to said point, line, area, and/or space, preferably of each tracking device, can be determined while still using cost-efficient GNSS beacons.

Further as a consequence of the fact that position is determined based on a GNSS system and not by covering a local area by means of a radiation grid, the system is also applicable for large-area activities, even for mobile activities and for activities where it is almost impossible to generate a radiation grid, for example a boat racing circuit. The tracking devices are obviously carried by amongst others mobile persons, animals, vehicles, boats, or game elements, the base station may be made portable and easy movable, and the at least one reference tracking device having a fixed predefined position and/or orientation relative to a point, line, area, and/or space may be linked easily to another point, line, area, and/or space (e.g. the subsequent hole on a golf course). By simply redefining that at least one point, line, area and/or space and/or its position and/or orientation, the tracking system can even be adapted to a different sport or even an entirely different application.

In the context of the present invention, GNSS may be including every satellite navigation system available, such as GPS, GLONASS, Galileo, Compass, augmentation systems, etc.

Further, all satellite frequencies used in all kinds of GNNS systems may be used in the present invention, preferably GPS L1 and GPS L2 frequencies. By combining L1 and L2, positions may be determined in 3D, i.e. not only in the plane of the local area but also in vertical direction.

In an embodiment in accordance with the present invention, the local area tracking device may comprise a GNSS re-radiator, preferably a GPS re-radiator and even more preferably a DUAL GPS re-radiator for L1 and L2. GNSS re-radiators are devices which operate by obtaining signals from GNSS satellites, using an antenna located outdoors, and re-transmitting them to a closed indoor environment, such as (semi)-closed stadiums, concert halls, concrete buildings, underground parking lots, etc. The re-radiating equipment consists of GNSS antennas of high sensitivity, signal amplifying units and a GNSS receiver to accept the incoming amplified signals.

By using such re-radiator, the local area tracking system may be used indoor, while less suffering from reflections compared to RF- based tracking systems.

Further, the sensitivity of the tracking devices may be increased significantly by adapting an LNA amplifier on the chip. This may result in GNSS signal receipt within semi-indoor stadiums, indoor stadiums, inside buildings, even without re-radiator.

In accordance with the present invention, the local area tracking system may comprise synchronizing means for accurately synchronizing the clocks of the tracking devices and base station with the atomic clocks of the GNSS satellites.

Advantageously, the interface of at least one of the tracking devices comprises a wireless transmitter. This will provide freedom of movement to the tracking device.

Advantageously, the navigational receiver of at least one of the tracking devices is also suitable for receiving pseudolite beacon L1 and L2 signals, so as to correctly locate said at least one tracking device even during satellite beacon signal reception interruptions.

Advantageously, at least one of said tracking devices comprises at least one sensor for monitoring at least one additional parameter. This would provide additional information that could be particularly useful in combination with said relative positions.

The additional parameter may be a physical or mechanical parameter such as for example kick force on a ball. The sensor in the tracking device may be an accelerometer, a gyroscope, a pressure sensor, etc.

In a particularly advantageous embodiment, said at least one additional parameter comprises a physiological parameter such as heart rate, blood pressure, body temperature, blood sugar, etc. of a human or animal. Monitoring such physiological parameters can be particularly useful for optimizing the effort in sport training or competition, but also for tracking an outpatient. In a particularly advantageous embodiment thereof, the interface of said at least one tracking device is also suitable for transmitting said physiological parameter, and the tracking system also comprises means for alerting a sports coach or medical personnel if said physiological parameter rises above or sinks below a certain threshold.

Further, in another embodiment in accordance with the present invention, a local area tracking method is provided comprising the steps of:
- providing a plurality of tracking devices (4,4'), each comprising a tracking device receiver for receiving beacon signals and generating in response a signal indicating the position of said tracking device (4,4'), and an interface (8) for transmitting at least an identifier signal and said position signal;
- transmitting the position and identifier signals of said plurality of tracking devices (4,4') to a base station (5);
- calculating the relative positions of said tracking devices (4,4');

characterized in that the tracking device receiver is a GNSS receiver and that the method further comprises the steps of:
- defining a fixed position and/or orientation of at least one point, line, area, and/or space relative (3,3a,3b,3c,3d,3e,15,15a,15b,17) to at least one of said plurality of tracking devices (4,4') which is a reference (4'); and
- calculating the position of at least another one of said tracking devices (4,4') relative to said at least one point, line, area, and/or space.

The advantages as mentioned with respect to a local area tracking system in accordance with the present invention are also present with respect to the above method.

### EXAMPLE 1

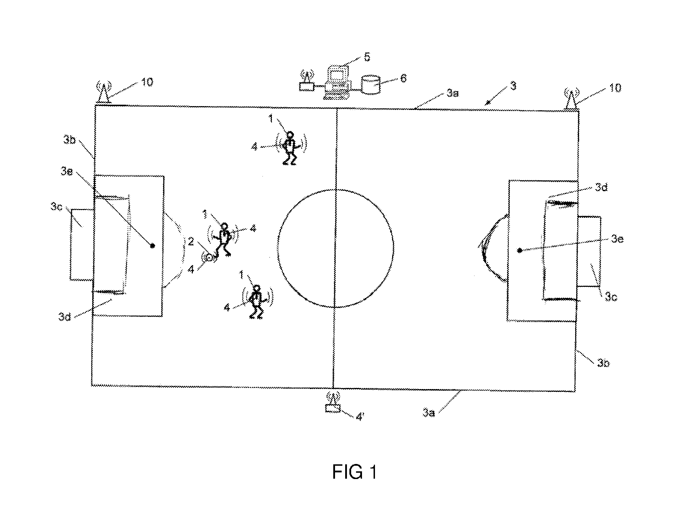

Referring now to FIG 1, an embodiment of the tracking system of the present invention is represented which is applicable for tracking association football players 1 and a ball 2 in an association football field 3 featuring touch lines 3a, goal lines 3b, goals 3c, penalty areas 3d, penalty kick spots 3e, etc. Each of the players 1 and the ball carry a tracking device 4. The tracking system also comprises a further tracking device 4' as a reference to be placed in a fixed position relative to the field 3 and a base station 5 connected to recording means 6. Although in this example the reference tracking device 4' and the base station 5 are separate, it would be possible to integrate the reference tracking device 4' in the base station 5. The recording means 6 could also be integrated in the base station 5.

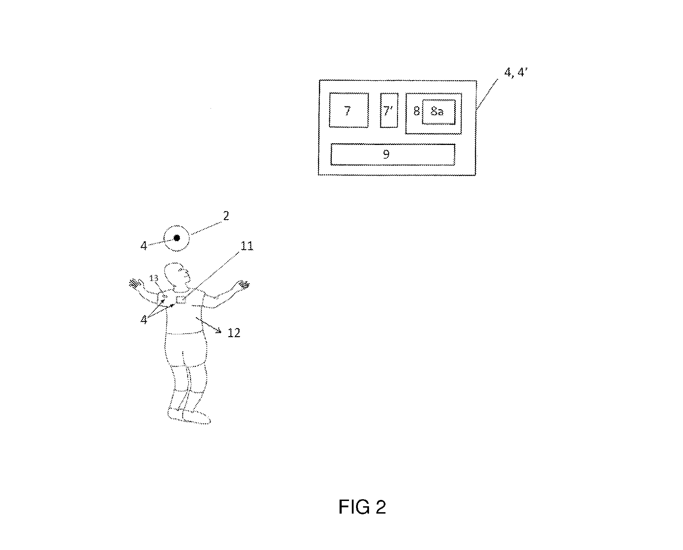

Turning now to FIG 2, each one of the tracking devices 4 or 4' comprises at least a global navigation satellite system receiver 7 for receiving satellite beacon signals and generating in response a signal indicating the position of said tracking device 4 or 4', and an interface 8 for transmitting at least an identifier signal and said position signal. In this example the GNSS receiver 7 is a GPS receiver, but any other GNSS such as GLONASS or Galileo could be used instead or simultaneously.

To allow the players complete freedom of movement, the interface 8 of this example comprises a wireless transmitter 8a for transmitting said identifier and position signals. In this particular embodiment, said wireless transmitter 8a could be a transmitter for a wireless local area network (WLAN), such as a WiFi transmitter, or a transmitter for a shorter-range wireless personal area network (WPAN), such as a Bluetooth or Zigbee transmitter. However, for other applications where a longer, eventually global range would be necessary, other types of wireless transmitters could be considered, including cellular telephony transmitters such as GSM, GPRS, UMTS, 3G, Iridium or Thuraya transmitters.

Moreover, this tracking device 4 or 4' also comprises a power supply 9, in this case embodied in a battery, although alternative forms of power supply could be considered, such as generators for converting the player's movements and/or his body heat in electrical energy.

Turning back to FIG 1, the base station 5 is equipped to receive said position signals, wirelessly in this example, and calculate the relative positions of said tracking devices 4 or 4'. This takes advantage of the basic principle of "differential GPS" that GNSS receivers located in close proximity generate position signals with nearly identical errors, allowing their relative positions to be calculated with a much higher accuracy.

In addition, the illustrated embodiment also comprises two pseudolites 10 with known fixed positions for transmitting beacon signals complementing those of the global navigational satellite system, in particular during periods of impaired reception of the satellite beacon signals.

As further illustrated by FIG 2, a player 1 is depicted carrying a tracking device 4 with a main body 11 integrated into his shirt 12 and a sensor 13 for monitoring physiological parameters, such as heart rate, blood pressure, body temperature or blood glucose level. Although in the illustrated example the sensor 13 is implanted into the body of the player 1 and transmits those physiological parameters wirelessly to the main body 11 of the tracking device 4, alternative arrangements are possible in which sensors are external to the body of the player 1 and/or are connected through other means to the rest of the tracking device 4 or even integrated therein.

The tracking device 4 is equipped to also transmit those physiological parameters to the base station 5, which comprises means for alerting a supervisor, such as a sports coach or medical personnel, if said physiological parameter rises above or sinks below a predetermined threshold.

FIG 2 also depicts a ball 2 carrying a tracking device 4 comprising a sensor for monitoring additional parameters, such as force or acceleration and also equipped for transmitting said additional parameters to the base station 5. In other embodiments having different applications, such as tracking competitors in motorsports, said additional parameters could comprise mechanical parameters such as fuel level, coolant temperature, engine rpm, etc.

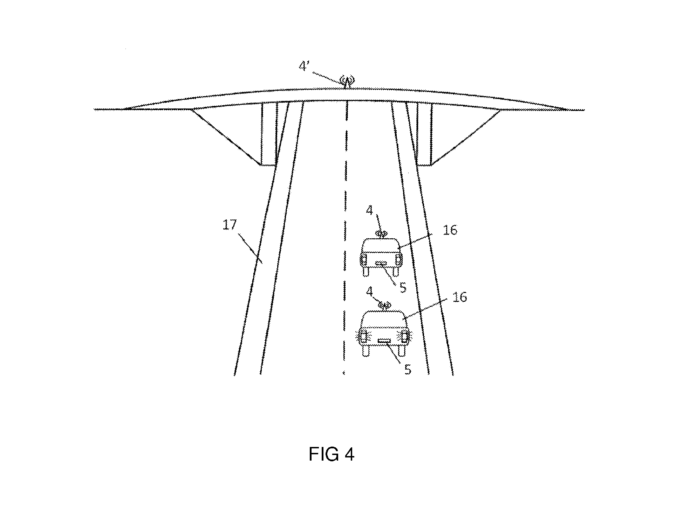

An example of a tracking method according to the invention will now be illustrated with reference to Figs. 1 and 4.

As a first step a plurality of tracking devices 4, 4' is provided, comprising at least one reference tracking device 4', and each one of them comprising a global navigation satellite system receiver for receiving satellite beacon signals and generating in response a signal indicating the position of said tracking device 4, 4', and an interface for transmitting at least an identifier signal and said position signal.

In the following step, the positions and orientations of the features of the field 3, such as touch lines 3a, goal lines 3b, goals 3c, penalty areas 3d, penalty kick spots 3e, etc. are defined relative to the reference tracking device 4'.

In the next step, the tracking devices 4,4' start generating position signals in response to the beacon signals received from satellites and/or pseudolites 10, so as to transmit them in conjunction with identifier signals and eventually also in conjunction with additional parameters, such as physiological parameters of the players and/or physical parameters, to the base station 5.

In a preferred embodiment, each tracking device 4,4' measures its position and/or those additional parameters at least 10 times, or at least 20 times per second, preferably at least 200 times per second, transmitting one set of data for instance once per second. If then fifty tracking devices are used and the base station requests and receives 1 set of data with an interval of 0,02 seconds, the data sets of all fifty tracking device are received in one second.

These position signals are then used to calculate the positions of the tracking devices 4, 4' relative to each other. Knowing the positions of the players 1 and ball 2 relative to the reference tracking device 4', and also the predefined fixed positions of the field features 3a-3e relative to the same reference tracking device 4', it is then possible in step 70 to calculate the positions of the players 1 and ball 2 relative to those field features 3a-3e. This information can then be used to determine a game occurrence: if, for instance, one of the players 1 is located closer to the goal line of the opposing team than the ball 2 and all the players 1 of the opposing team (with exception of the goalkeeper), the tracking system will indicate a potential offside. Similarly, if the ball 2 is located within one of the goals 3c, the tracking system will determine that a goal has been scored. Eventually, the additional parameters transmitted by the tracking devices 4, 4' could also be involved in the determination of game occurrences. Ball contact could for instance be determined by the relative positions of players 1 and ball 2 in conjunction with acceleration signals from a sensor in the tracking device 4 in the ball 2. If the player tracking devices were also equipped to monitor and transmit acceleration, for instance, those acceleration signals could be useful in conjunction with the position of the players 1 relative to the penalty areas 3d to assist the referee in determining whether a foul was committed within or without a penalty area 3d.

Such game occurrences could be transmitted to the referee, possibly through a portable wireless receiver which would signal the occurrence through sound or vibration.

### EXAMPLE 2

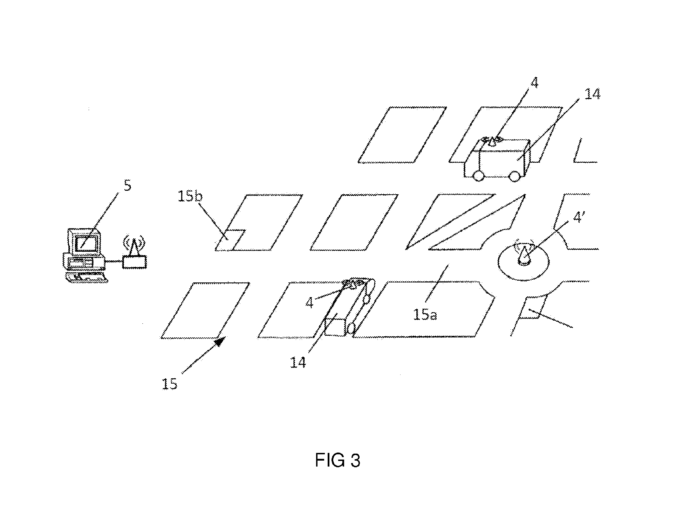

FIG 3 represents a different embodiment of the invention in the form of a logistics tracking system. This particular logistics tracking system comprises tracking devices 4 mounted on delivery trucks 14, a reference tracking device 4' and a base station 5 and is suitable for providing the positions of the delivery trucks 14 relative to each other and to features of a city 15, such as streets 15a and delivery and/or pickup addresses 15b. Similar logistic tracking systems according to the invention would also be applicable for tracking containers and forklift trucks in a storage and/or transshipment area. Tracking systems for wide area applications such as this one could make use of a Wide Area DGPS (WADGPS), possibly a global WADGPS.

### EXAMPLE 3

A similar embodiment of the invention in the form of a wide area tracking system for tracking vehicles is represented in FIG 4. In this embodiment the tracking devices 4 would be mounted on road vehicles and a base station 5, which could also be mounted on each vehicle, would issue signals in response to the positions of the vehicles 16 relative to each other and to the road network 17. For instance, if, as illustrated, one of the vehicles 16 rode up too close behind another, the base station 5 could disconnect the cruise control, brake and/or warn the driver. Similarly, if a vehicle 16 reached a speed-limited area due, for example, to road works, the base station 5 could also disconnect the cruise control, brake and/or warn the driver. Alternative embodiments would be applicable to rail vehicles, such as trains, tramways or mass transport systems, to water and/or to air transport.

A tracking system according to the invention could also be used to track vehicles within a local area, applying DGPS or Local Area DGPS (LADGPS). Some embodiments thereof would be a production area comprising self-propelled carts equipped with tracking devices 7 for transporting assembly elements or an automated parking system for parking vehicles in carmakers' parking areas or in parking areas for large events.

### EXAMPLE 4

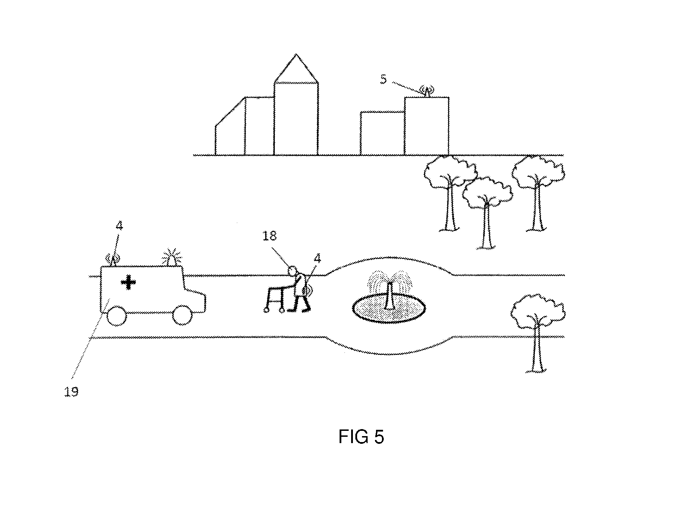

Another embodiment of the invention as a wide area tracking system is represented in FIG 5. In this embodiment, a tracking device 4 would be carried by an outpatient 18. Preferably, this tracking device would comprise a physiological sensor as described above and/or an alarm device, so as to alert emergency services which would be informed of the precise location to which to send an ambulance, police or fire patrol 19. In this application it would be particularly advantageous if the ambulances, police and/or fire patrols 19 were themselves equipped with tracking devices 4, so that the closest ambulance, police and/or fire patrol 19 could be directed to the outpatient 18. A similar embodiment could be used as an anti-hijacking system.

Other embodiments of the invention could be used for tracking and assisting visitors in tourist attractions, entertainment events or pilgrimage sites or for tracking workers in industrial installations comprising hazardous areas.

## Claims

1. A local area tracking system comprising:
- a plurality of tracking devices (4,4'), each one comprising a tracking device receiver (7) for receiving beacon signals and generating in response a signal indicating the position of said tracking device, and an interface (8) for transmitting at least an identifier signal and said position signal; and
- a base station (5) comprising means for receiving said identifier and position signals and calculating the relative positions of the tracking devices (4,4');
**characterized in that** said tracking device receiver is a GNSS receiver, that at least one of said tracking devices (4,4') is a reference (4'), and that said base station (5) also comprises means for calculating the relative position of at least another one of said tracking devices relative to a point, line, area, and/or space (3,3a,3b,3c,3d,3e,15,15a,15b,17) having a fixed predefined position and/or orientation relative to said reference tracking device (4').

2. A local area tracking system according to claim 1, **characterized in that** the system is made portable.

3. A local area tracking system according to claims 1 or 2, comprising a GNSS re-radiator.

4. A local area tracking system according to claims 1 to 3, wherein the tracking device receiver of at least one of said tracking devices (4,4') is also suitable for receiving pseudolite L1 and L2 beacon signals.

5. A local area tracking system according to any one of the previous claims, further comprising at least one pseudolite (10).

6. A local area tracking system according to any one of the previous claims, wherein at least one of said tracking devices (4,4') comprises a sensor (13) for monitoring a physiological, physical, or a mechanical parameter.

7. A local area tracking system according to claim 6, further comprising means for alerting a supervisor if said parameter rises above or sinks below a predetermined threshold.

8. A local area tracking system according to claim 7, wherein said sensor (13) is suitable for being implanted into the body of said human or animal.

9. A sport tracking system comprising a local area tracking system according to any one of the previous claims, wherein at least one of said tracking devices is suitable for being carried by a sport player (1) or sport equipment (2), wherein said at least one point, line, area and/or space (3,3a,3b,3c,3d,3e,15,15a,15b,17) is a feature of a sport field, track, pitch or arena, and wherein said sport tracking system comprising means for indicating a game occurrence according to said relative positions.

10. Use of a local area tracking system according to any of the above claims in indoor areas.

11. A local area tracking method comprising the steps of:
- providing a plurality of tracking devices (4,4'), each comprising a tracking device receiver for receiving beacon signals and generating in response a signal indicating the position of said tracking device (4,4'), and an interface (8) for transmitting at least an identifier signal and said position signal;
- transmitting the position and identifier signals of said plurality of tracking devices (4,4') to a base station (5);
- calculating the relative positions of said tracking devices (4,4'); **characterized in that** the tracking device receiver is a GNSS receiver and that the method further comprises the steps of:
- defining a fixed position and/or orientation of at least one point, line, area, and/or space relative (3,3a,3b,3c,3d,3e,15,15a,15b,17) to at least one of said plurality of tracking devices (4,4') which is a reference (4'); and
- calculating the position of at least another one of said tracking devices (4,4') relative to said at least one point, line, area, and/or space.

12. A local area tracking method according to claim 11, wherein the navigation receiver is also suitable for receiving pseudolite beacon signals, and the tracking method also comprises the step of providing at least one pseudolite (10).

13. A local area tracking method according to claims 11 or 12, wherein at least one of said tracking devices (4,4') is carried by a sport player (1) or sport equipment (2), wherein said at least one point, line, area and/or space (3,3a,3b,3c,3d,3e,15,15a,15b,17) is a feature of the sport field, pitch, track or arena, and wherein said tracking method further comprising the step of indicating a game occurrence according to said relative positions.

14. Use of a local area tracking method according to claims 11 to 13 in indoor areas.
